# EUROPEAN PATENT SPECIFICATION

(11) **EP 2 512 100 B1**
(45) Date of publication and mention of the grant of the patent: **28.06.2017**
(21) Application number: 12175224.0
(22) Date of filing: 27.05.2004
(51) Int. Cl.: H04L 29/06, H04L 12/28, H04M 1/725

(54) **MOBILE COMMUNICATION SYSTEM AND MOBILE TERMINAL DEVICE**
MOBILES KOMMUNIKATIONSSYSTEM UND MOBILE ENDGERÄTEVORRICHTUNG
SYSTÈME DE COMMUNICATION MOBILE ET DISPOSITIF TERMINAL MOBILE

(30) Priority: 06.06.2003 JP 2003162368
(43) Date of publication of application: 17.10.2012
(62) Divisional of application: 04012599.9
(73) Proprietor: Lenovo Innovations Limited (Hong Kong), Quarry Bay, Hong Kong (HK)
(72) Inventor: Suzuki, Junichi, Minato-ku, Tokyo 108-8001 (JP)
(74) Representative: Glawe, Delfs, Moll

(56) References cited:
- US-A1- 2003 041 125

## Description

### BACKGROUND OF THE INVENTION

### 1. Field of the Invention

The present invention relates to a mobile communications system and a mobile terminal device, and in particular to a mobile communications system having a mobile terminal device which downloads a program from a server through a network.

### 2. Description of the Related Art

A recent mobile terminal device, especially a portable telephone can incorporate various functions, such as a telephone directory, message recording, transfer, picture taking, and games. Since a portable telephone is integrally incorporated with hardware and software, a user can neither incorporate new functions nor delete unnecessary functions after purchasing the portable telephone. In order to use new functions, a user has to purchase a new portable telephone.

Japanese Patent Laid-open Official Gazette No. 2002-118510 discloses an external operation unit that can make connections with a mobile wireless telephone that is mounted in a car. Although this unit has a library including a set of downloadable functions, this unit is an apparatus other than a telephone.

A mobile terminal device according to the preamble of claim1 is disclosed in US-2003/041125.

### SUMMARY OF THE INVENTION

A mobile terminal device and a mobile communication system according to the invention are defined in claims 1 and 4, respectively; the dependent claims are related to further developments of the invention.

### BRIEF DESCRIPTION OF THE DRAWINGS

The above-mentioned and other objects, features and advantages of the present invention will become apparent from the following detailed description when taken with the accompanying drawings in which:
FIG.1 shows an example of a mobile communications system according to the present invention.
FIG. 2 is a block diagram of an example of a mobile terminal device.
FIG. 3 is a block diagram of an example of a function management means.
FIG. 4 is a block diagram of an example of a server.
FIG. 5 is a flow chart of an example of an operation of the mobile communications system according to the present invention.
FIG. 6 is a flow chart of another example of the operation of the mobile communications system according to the present invention.
FIG. 7 is a block diagram of another example of the function management means.
FIG. 8 shows another example of the mobile communications system according to the present invention.

### DETAILED DESCRIPTION OF THE PREFERRED EMBODIMENTS

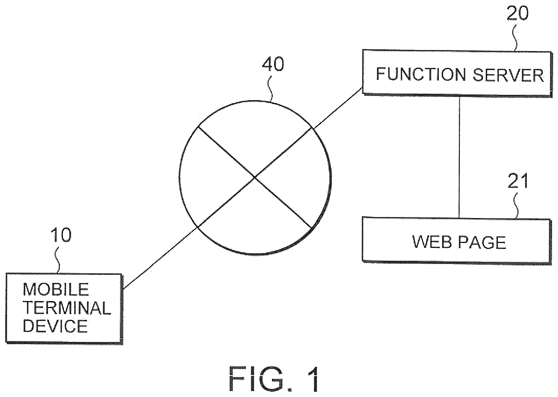

Hereinafter, preferable embodiments of a mobile communications system and a mobile terminal device according to the present invention will be described. As shown in FIG. 1, the mobile communications system according to an embodiment of the present invention includes a mobile terminal device 10, a function server 20, and a network 40. The function server 20 has a Web page 21 (HTML documents contained in a WWW (worldwide Web) server) and software (hereinafter, referred to as "function programs") which performs various functions on the mobile terminal device 10. The mobile terminal device 10 can make connections with the network 40. Furthermore, the mobile terminal device 10 can access the function server 20 to download various function programs from the Web page 21.

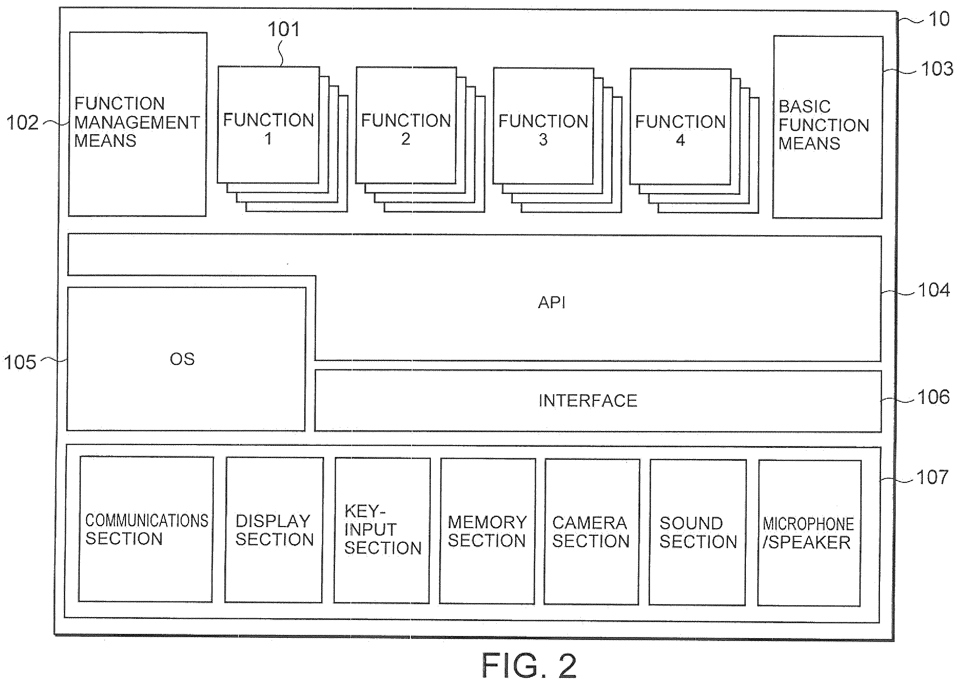

As shown in FIG. 2, the mobile terminal device 10 according to the embodiment includes various kinds of hardware 107, interface 106, operating systems (OSs) 105, and application program interface (API) 104. The hardware 107 includes, for example, a communications section, a display section, a key-input section, a memory section, a camera section, a sound section, a microphone and a speaker. Furthermore, the mobile terminal device 10 includes a basic function means 103 that controls communications, function programs 101, and a function management means 102 that manages the function programs 101. The function programs 101 may be installed in the mobile terminal device 10 in advance. In addition, the mobile terminal device 10 can download the function programs 101 therein from the Web page, and can also delete function programs that have been already installed. The API 104 functions as interface with subordinate modules.

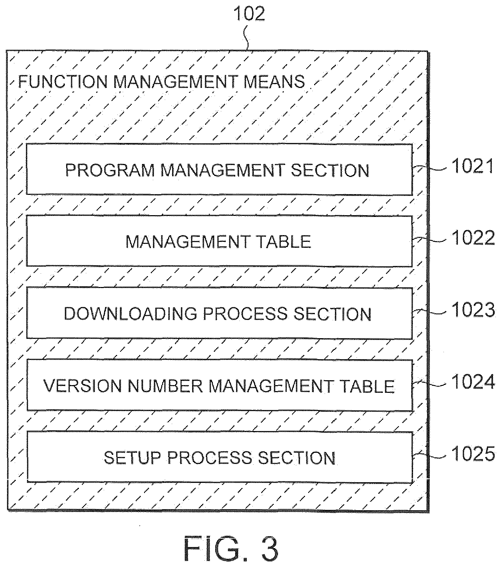

FIG. 3 shows components of the function management means 102 according to the embodiment. The function management means 102 includes a program management section 1021, a management table 1022, a downloading process section 1023, a version number management table 1024, and a setup process section 1025. The management table 1022 registers function programs. The downloading process section 1023 downloads and overwrites under the control by the program management section 1021. The program management section 1021 transmits to the server 20 a request to download function programs that the user has chosen. Subsequently, the program management section 1021 identifies the chosen function programs and the version numbers thereof. Next, the program management section 1021 judges, with the reference to the management table 1022, whether the chosen function programs are the same as function programs that have been already installed, and whether the version numbers of the chosen programs is equal to those of the latest versions of the same programs that have not been downloaded yet. The program management section 1021 controls the downloading process section 1023, and causes the downloading process section to start downloading new or updated versions of the function programs. With regard to function programs that have already been installed, the downloading is cancelled. The version number management table 1024 records and manages the version numbers of installed function programs. The setup process section 1025 executes installed function programs.

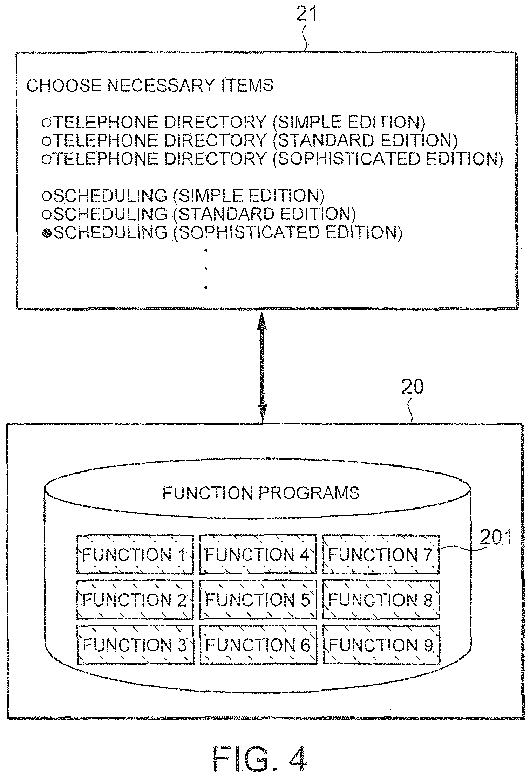

FIG. 4 shows an example of an embodiment relating the Web page 21 and the Server 20. The mobile terminal device 10 accesses the server 20, displays the Web page 21 on the display section of the mobile terminal device 10, and chooses function programs. FIG. 4 illustrates a telephone directory function, a scheduling function, ranging from a simple edition to a sophisticated edition. The server 20 stores a plurality of downloadable function programs 201 (functions 1 to 9).

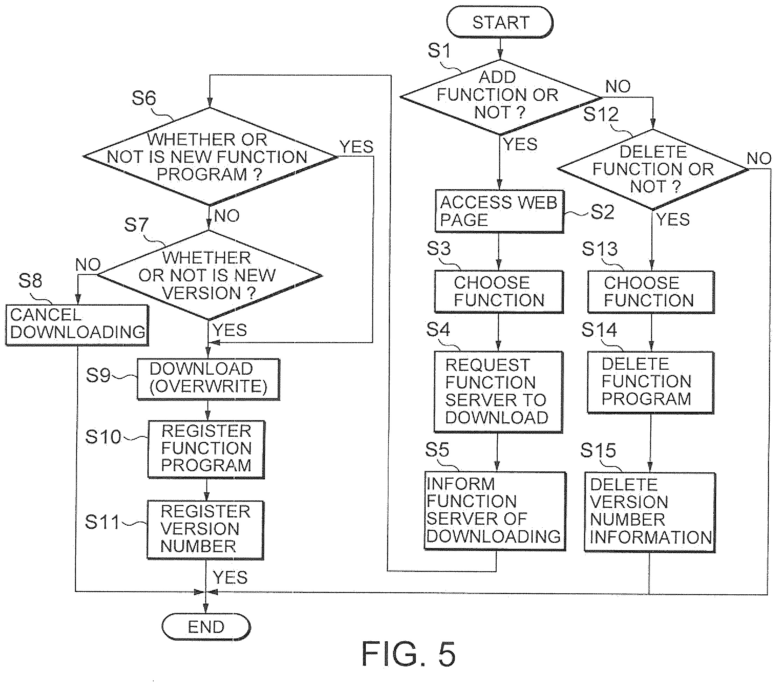

FIG. 5 shows an operation of a mobile communications system in the embodiment. A user of the mobile terminal device 10 wishes to download a new function program (S1), and accesses the Web page 21 of the function server 20 (S2). When the mobile terminal device accesses the Web page, the display section of the mobile terminal device 10 displays a selection screen as shown in FIG. 4. The user designates a desired function as an addition from the key-input section (S3). If the user designates, for example, a scheduling function (a sophisticated edition thereof) and operates a process of determination, the program management section 1021 transmits a request to download the program of the designated function to the server 20 (S4). The server 20 receives the request to download, chooses the designated program, and informs the mobile terminal device 10 of information of the commencement of the downloading that includes information of the designated function program (S5). Based on the information of the commencement of the downloading, the program management section 1021 of the mobile terminal device 10 judges whether or not the function of the function program intended to be downloaded is a new function, with reference to the management table 1022 (S6). If the function of the function program intended to be downloaded is a function whose program has already been installed, the mobile terminal device 10 additionally checks with the version number management table 1024 on the version number of the function program intended to be downloaded (S7) . If the version number of the function program that has already been installed is equal to that of the function program intended to be downloaded, the downloading is cancelled (S8). If the version number of the function program intended to be downloaded is larger than that of the function program that has already been installed, the program management section 1021 controls the downloading process section 1023, and downloads after deleting the existing function program, or overwrites the existing function program (S9). If the function program intended to be downloaded has not been installed yet (in the case of Yes in S6), the program management section 1021 downloads the function program. When the downloading is completed, the program management section 1021 registers the function program with the management table 1022 (S10). In addition, the program management section 1021 registers information of the version number of the function program and the like with the version number management section 1024 (S11). When the user intends to delete function programs (S12), the user causes the display section to display a list of function programs and the like, and chooses the programs that the user intends to delete (S13) . The program management section 1021 controls the downloading process section 1023, and eliminates the intended function programs, and then deletes the related registrations from the management table 1022 (S14). Additionally, information of the version numbers of the eliminated function programs is deleted from the version number management table 1024 (S15).

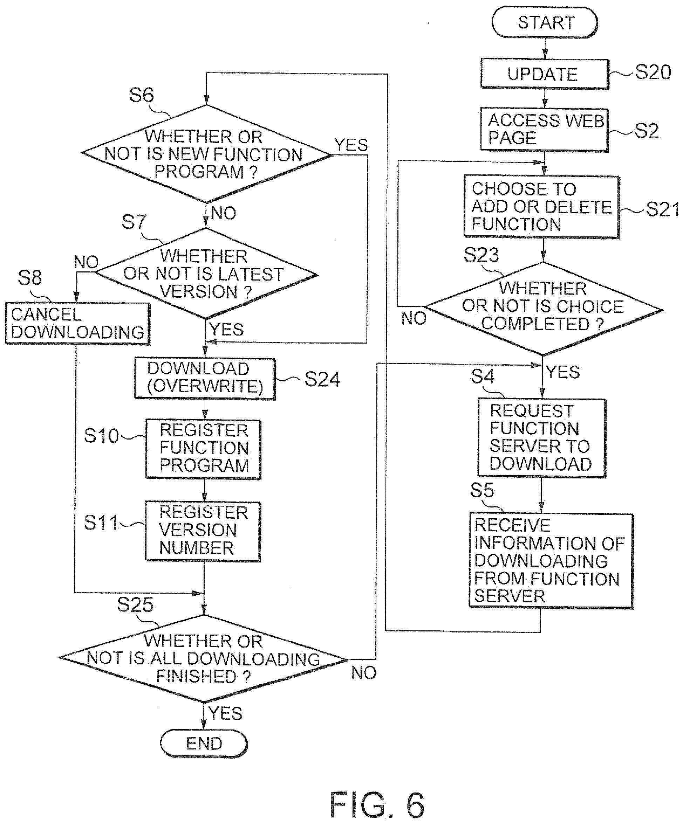

FIG. 6 shows an operation of a mobile communications system according to another embodiment of the present invention. When the user intends to update a plurality of function programs (S20), the user accesses the Web page 21 (S2). The user chooses to add and/or delete function programs (S21 and S23) a plurality of times. The user can also choose to update a plurality of function programs at one time. Subsequent processes from S4 to S8 are the same as those of FIG. 5. Next, the latest version of a first of the function programs to be updated is written over the previous version of the same function program in the mobile terminal device 10, or the latest version is downloaded after the previous version is deleted (S24). Then, the latest version of the program is registered (S10), and the version number of the program is registered (S11), In addition, similar processes are executed for the other function programs to be updated. In an example shown in FIG. 6, the server 20 can display function programs, which have been updated from time to time, as items to be updated for choice in the Web page. When the user chooses desired items to be updated, the user can download the updated versions of the plurality of desired function programs one after another.

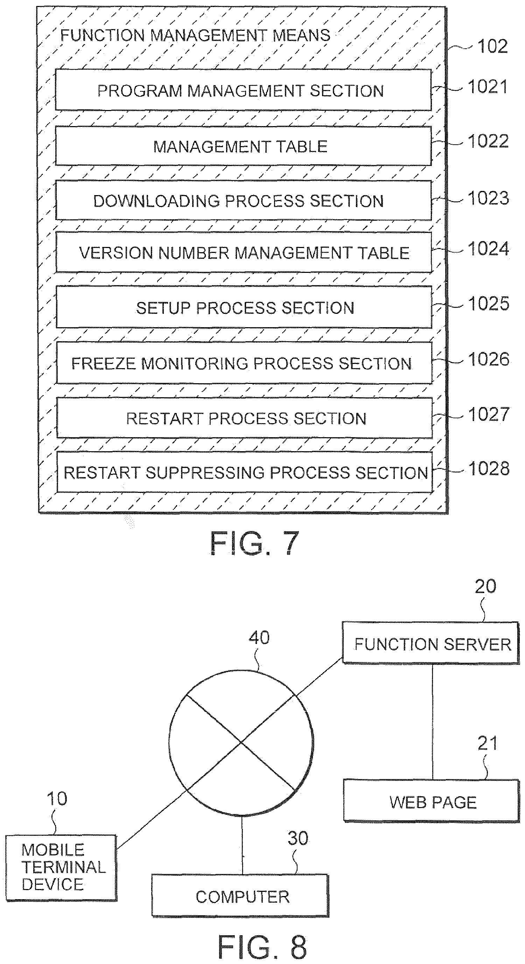

The mobile terminal device according to the embodiment of the present invention can install the standardized API therein, and accesses the server to download various function programs therein. However, when the mobile terminal device downloads programs therein through the network, it is likely that the mobile terminal device takes in programs laden with bugs. In such a case; it is highly likely that function programs freeze up in the course of their operation. FIG. 7 shows the function management means 102 of the mobile terminal device related to an example of capability of coping with a freeze. The function management means 102 shown in FIG. 7 includes a freeze monitoring process section 1026 that monitors a freeze on functions, a restart process section 1027 that restarts functions, and a setup suppressing process section 1028 that suppresses the setting up of the functions, in addition to 'components shown in FIG. 3. The freeze monitoring process section 1026 monitors the occurrence of a freeze while checking on the state of an operation of a program in a setup mode periodically. Based on the control of the freeze monitoring process section 1026, the restart process section 1027 forcibly shuts down a function program in a setup mode, if in a state of freezing, and restarts the function program. The restart suppressing process section 1028 detects the frequency of the occurrence of a freeze in a prescribed length of time, and, then forcibly shuts down the process of the restart process section 1027, and prohibits a restart, depending on the frequency of the occurrence of a freeze. The restart process section 1027, too, can restart a function program in operation that freezes, depending on the frequency of the occurrence of a freeze.

As shown in FIG. 8, the mobile terminal communications system according to the embodiment of the present invention includes a computer 30 that make connections with the network. The computer 30 accesses the server 20 through the network 40, and requests various function programs to be downloaded to the mobile terminal device 10. The computer 30 transmits to the server 20 information for identifying function programs and ID information regarding the telephone number of the mobile terminal device 10 and the like. Based on the received information, the server 20 accesses the mobile terminal device 10, and downloads function programs designated by the computer 30 to the mobile terminal device 10. The computer 30 represents, for example, a small home computer.

It is noted that the above-mentioned mobile communications system can include a security function that rejects an unauthorized access.

The mobile communications system enables the mobile terminal device to download software (function programs) therein easily through the network.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

### IMPORTANT ASPECTS OF THE INVENTION

1. A mobile communications system, comprising:
   a server having a Web page and a downloadable program; and
   a mobile terminal device in which a standardized Application Program Interface is installed, and
   wherein the mobile terminal device can access the Web page through a network to download the program.
2. The mobile communications system according to aspect 1,
   wherein the mobile terminal device includes a program management means that manages the program, and
   wherein the program management means manages the version of a program that is installed in the mobile terminal device, and, if the program is installed, the program management means can download only an uninstalled version.
3. The mobile communications system according to aspect 1,
   wherein the mobile terminal device includes a program operation control means, and
   wherein the program operation control means monitors an operation of an installed program, and controls a restart of the program.
4. The mobile communications system according to aspect 3,
   wherein the program operation control means controls a restart of a program based on the frequency of the occurrence of a freeze on the program.
5. The mobile communications system according to aspect 3,
   wherein the program operation control means includes a program restart process section that restarts a program that freezes, and a program restart suppressing process section that suppresses a restart of a program that freezes.
6. A mobile communications system, comprising:
   a server including a Web page and a downloadable program;
   a mobile terminal device in which a standardized Application Program Interface is installed; and
   a computer that can access a Web page through a network, and wherein the server downloads a predetermined program to the mobile terminal device based on an instruction from the computer.
7. The mobile communications system according to aspect 6,
   wherein the mobile terminal device includes a program management means that manages a program, and
   wherein the program management means manages the version of the program that is installed in the mobile terminal device, and, if the program is installed, the program management means can download only an uninstalled version.
8. The mobile communications system according to aspect 6,
   wherein the mobile terminal device includes a program operation control means, and
   wherein the program operation control means monitors an operation of the installed program, and controls a restart of the program.
9. The mobile communications system according to aspect 8,
   wherein the program operation control means controls a restart of a program based on the frequency of the occurrence of a freeze on the program.
10. The mobile communications system according to aspect 8,
   wherein the program operation control means includes a program restart process section that restarts a program that freezes, and a program restart suppressing process section that suppresses a restart of a program that freezes.
11. A mobile terminal device that can access a Web page to download a program, comprising a standardized Application Program Interface.
12. The mobile terminal device according to aspect 11,
   further comprising a program management means that manages programs, and wherein the program management means manages the version of a programs installed in the mobile terminal device, and, if the program is installed, the program managements means can download an uninstalled version.
13. The mobile terminal device according to aspect 11,
   further comprising a program operation control means, and
   wherein the program operation control means monitors an operation of the installed program, and controls a restart of the program.
14. The mobile terminal device according to aspect 13,
   wherein the program operation control means includes a program restart process section that restarts a program that freezes, and a program restart suppressing process section that suppresses a restart of a program that freezes.
15. The mobile terminal device according to aspect 13,
   wherein the program operation control means controls a restart of a program based on the frequency of the occurrence of a freeze on the program.

## Claims

1. A mobile terminal device (10) which makes connection with a network (40) and accesses a server (20) including a Web page (21) and downloadable function programs for adding new functions to the mobile terminal device (10), comprising:
a standardized Application Program Interface means (104) adapted to interface with subordinate modules in the mobile terminal device;
a plurality of function programs (101) for providing each function corresponding to the function program; and
a function management means (102) adapted to manage addition by downloading from the server and deletion of the function program,
**characterized in that** the function management means includes:
a freeze monitoring means (1026) that monitors occurrence of the freeze while checking on a state of operation of the function program downloaded from the server (20) in a setup mode of the function;
a restart processing means (1027) that forcibly shuts down the function program in the setup mode and restarts the function program if the freeze has been detected by the freeze monitoring means; and
a setup suppress processing means (1025) that suppresses the setting up of the function depending on a frequency of occurrences of the freeze in a prescribed length of time having been detected.

2. The mobile terminal device according to claim 1, wherein the function management means (102) includes,
a program management means (1021) for managing downloading of the function program with referring to information of commencement of the downloading which includes information of the function program to be downloaded and is informed from the server prior to commencement of the downloading.

3. The mobile terminal device according to claim 2, wherein the program management means (1021) manages the function programs installed in the mobile device (10) with respective version numbers, determines whether downloads the function program or not based on the information of commencement of downloading informed from the server (20), and downloads the function program only in an uninstalled version.

4. A mobile communication system, comprising:
a mobile terminal device according to any of claims 1 to 3; and
a server (20) including a Web page and downloadable function programs for adding new functions to the mobile device (10), and notifies the mobile terminal (10) of information of commencement of downloading which includes information of the function program to be downloaded prior to commencement of the downloading the function program which is designated to be downloaded.

## Patentansprüche

1. Mobile Endgerätvorrichtung (10), die eine Verbindung mit einem Netzwerk (40) herstellt und auf einen Server (20) einschließlich einer Webseite (21) und auf herunterladbare Funktionsprogramme zur Zufügung neuer Funktionen zu der mobilen Endgerätvorrichtung (10) zugreift, mit:
einer standardisierten Anwendungsprogramm-Schnittstelleneinrichtung (104), die ausgebildet ist, um sich mit untergeordneten Modulen in der mobilen Endgerätvorrichtung zu verbinden,
einer Anzahl von Funktionsprogrammen (101) zur Schaffung jeder Funktion entsprechend dem Funktionsprogramm und
einer Funktions-Verwaltungseinrichtung (102), die ausgebildet ist, um die Zufügung durch das Herunterladen von dem Server und das Löschen des Funktionsprogramms zu verwalten,
**dadurch gekennzeichnet, dass** die Funktions-Verwaltungseinrichtung aufweist:
eine Stillstand-Überwachungseinrichtungen (1026), die das Auftreten des Stillstands überwacht, während sie einen Betriebszustand des Funktionsprogramms, das von dem Server (20) heruntergeladen wurde, in einem Einrichtungsmodus der Funktion überwacht,
eine Neustart-Verarbeitungseinrichtung (1027), die zwangsweise das Funktionsprogramm in dem Einrichtungsmodus abschaltet und das Funktionsprogramm erneut startet, falls der Stillstand durch die Stillstand-Überwachungseinrichtung erfasst wird, und eine Einrichtungs-Unterdrückungs-Verarbeitungseinrichtung (1022), die das Einrichten der Funktion abhängig davon unterdrückt, dass eine Frequenz des Auftretens des Stillstands in einer vorgegebenen Zeitspanne erfasst wurde.

2. Mobile Endgerätevorrichtung nach Anspruch 1, wobei die Funktions-Verwaltungseinrichtung (102) aufweist eine Programm-Verwaltungseinrichtung (1021) zum Verwalten des Herunterladens des Funktionsprogramms mit Bezug auf Informationen des Beginns des Herunterladens, die Informationen des herunterzuladen Funktionsprogramms umfassen und von dem Server vor dem Beginn des Herunterladens informiert werden.

3. Mobbile Endgerätvorrichtung nach Anspruch 2, wobei die Programm-Verwaltungseinrichtung (1021) das Funktionsprogramm, das in der Mobilvorrichtung (10) installiert ist, mit Bezug auf Versionsnummern verwaltet, bestimmt, ob das Funktionsprogramm heruntergeladen wird oder nicht, basierend auf den Informationen über den Beginn des Herunterladens, die von dem Server (20) informiert wurden, und das Funktionsprogramm nur in einer nicht installierten Version herunterlädt.

4. Mobillkommunikationssystem mit:
einer mobilen Endgerätvorrichtung nach einem der Ansprüche 1 bis 3 und
einem Server (20) einschließlich einer Webseite und herunterladbarer Funktionsprogramme zur Zufügung neuer Funktionen zu der mobilen Vorrichtung (10), der dem mobilen Endgerät (10) Informationen des Beginns des Herunterladens mitteilt, die Informationen über das herunterzuladende Funktionsprogramm vor dem Beginn des Herunterladens des Funktionsprogramms, das als herunterzuladen bezeichnet ist, umfassen.

## Revendications

1. Dispositif de terminal mobile (10) qui effectue une connexion à un réseau (40) et accède à un serveur (20) comprenant une page Web (21) et des programmes de fonctions téléchargeables pour ajouter de nouvelles fonctions au dispositif de terminal mobile (10), comprenant :
des moyens formant interface de programme d'application normalisés (104) conçus pour s'interfacer avec des modules subordonnés dans le dispositif de terminal mobile ;
une pluralité de programmes de fonctions (101) pour fournir chaque fonction correspondant au programme de fonction ; et
des moyens de gestion de fonction (102) conçus pour gérer un ajout par un téléchargement à partir du serveur et un effacement du programme de fonction,
**caractérisé en ce que** les moyens de gestion de fonction comprennent :
des moyens de surveillance de gel (1026) qui surveillent une apparition du gel tout en vérifiant un état de fonctionnement du programme de fonction téléchargé à partir du serveur (20) dans un mode de configuration de la fonction ;
des moyens de traitement de redémarrage (1027) qui arrêtent de force le programme de fonction dans le mode de configuration et redémarrent le programme de fonction si le gel a été détecté par les moyens de surveillance de gel ; et
des moyens de traitement de suppression de configuration (1025) qui suppriment la configuration de la fonction en fonction d'une fréquence d'apparitions du gel pendant une période de temps prescrite qui a été détectée.

2. Dispositif de terminal mobile selon la revendication 1, dans lequel les moyens de gestion de fonction (102) comprennent :
des moyens de gestion de programme (1021) pour gérer le téléchargement du programme de fonction en se référant à des informations de commencement du téléchargement qui comprennent des informations du programme de fonction à télécharger et qui sont communiquées par le serveur avant le commencement du téléchargement.

3. Dispositif de terminal mobile selon la revendication 2, dans lequel les moyens de gestion de programme (1021) gèrent les programmes de fonctions installés dans le dispositif mobile (10) avec des numéros de version respectifs, déterminent s'il convient ou non de télécharger le programme de fonction sur la base des informations de commencement de téléchargement communiquées par le serveur (20), et téléchargent le programme de fonction uniquement dans une version non installée.

4. Système de communication mobile, comprenant :
un dispositif de terminal mobile selon l'une quelconque des revendications 1 à 3 ; et
un serveur (20) comprenant une page Web et des programmes de fonctions téléchargeables pour ajouter de nouvelles fonctions au dispositif mobile (10), et qui notifie au terminal (10) les informations de commencement de téléchargement qui comprennent des informations du programme de fonction à télécharger avant le commencement du téléchargement du programme de fonction qui est désigné pour être téléchargé.
